# EUROPEAN PATENT APPLICATION

(11) **EP 2 597 379 A2**
(43) Date of publication of application: **29.05.2013**
(21) Application number: 12382296.7
(22) Date of filing: 24.07.2012
(51) Int. Cl.: F24D 15/04, F24D 15/02, F24H 1/06, F24D 11/02, F24D 17/02, F24D 3/08

(54) **Autonomous climate control unit**

(30) Priority: 01.09.2011 ES 201131441
(71) Applicant: Sanchez Perez, Vicente, 28907 Getafe - Madrid (ES); De Isabel Garcia, Juan Antonio, 28109 Alcobendas - Madrid (ES)
(72) Inventor: Sanchez Perez, Vicente, 28907 Getafe - Madrid (ES); De Isabel Garcia, Juan Antonio, 28109 Alcobendas - Madrid (ES)
(74) Representative: Alvarez, Fernando

(57) **Abstract**

The unit is formed by a portable container (1) inside of which there is a high efficiency geothermal heat pump (2) installed, capable of transmitting the heat from the ground or air to be used both for heating and for sanitary hot water, connected to a sanitary hot water collecting deposit (9) and to a climate control inertia deposit (10), with inlets / outlets for the supply of sanitary hot water and climate control water, respectively. The device comprises a water condensation heat exchanger connected to some geothermal wells with a geothermal probe to perform the thermal exchange with the ground, which is connected to a condensation battery connected to the heat pump. The air condensation battery is in turn associated with its respective groups of condensation air admission fans and condensation air exit fans, all of this with an electric panel and a control system that allows using the unit in two operational modes.

## Description

### OBJECT OF THE INVENTION

The present invention refers to an autonomous climate control unit, which is designed to determine a thermal plant with a heat pump, using both "aerothermics" and "geothermics" for the joint production of cold and / or hot water usable for climate control, as well as sanitary hot water and / or for consumption.

The object of the invention is to achieve significant savings in the direct costs of climate control in places where the unit is to be introduced, as well as to reduce fossil fuel needs and thus prevent geo-strategic problems that are usually attached to this type of supply, definitely lowering the elevated fuel costs.

The unit is to be applied preferably in the military industry (military platforms, camps, etc.), without ruling out its application in various situations in a civil environment, such as personnel booths placed in construction sites, tertiary or commercial buildings, educational or sporting facilities, in locker rooms, security and staff booths, or even for climate control in enclosed bus stops, railroad station facilities, or climate control in transportation stations, such as underground, bus, transportation exchangers, etc.

### BACKGROUND OF THE INVENTION

As it is known, the use of climate control units in military facilities and in any type of building, as well as the use of LPG (liquefied petroleum gasses), gas-oil or natural gas, utilize fuel from fossil sources.

Well, the use of these types of climate control means, on the one hand, the use of a technology with low energy efficiency ratios, with all the problematic in consumption and costs, with the added difficulty that to use the supply of fossil fuels in foreign missions could end up being highly relevant, even being considered an enemy military objective, all of that without forgetting the elevated economic cost associated with fossil fuels.

In short, the units or systems currently used for climate control represent an extremely high energy consumption and very low energy efficiency, in addition to high material problems in military facilities, as well as maintenance problems due to the diversity of air conditioning machines, with a very low lifespan, numerous management problems, etc.

Therefore, given the current global energy situation, achieving a decrease in the demand for primary energy as well as the geo-political dependence on fossil fuels is a remarkably important milestone, such that the state of decrease represents two aspects with a high value added in the optimization of current expenditures of bases and facilities within the national territory, as well as in tasks of a logistic nature and in foreign missions, decreasing costs, increasing both operability and safety in human and material resources, as well as eliminating a high percentage of the energy consumption intended for climate control units, sanitary hot water and food refrigeration.

Up to this moment, it is unknown whether there are units that could be in line with the autonomous climate control unit proposed by the invention.

### DESCRIPTION OF THE INVENTION

The unit being recommended provides a series of innovative comparative advantages with regards to the options presented by the units designed for the same purpose and which have been and still are commonly used, for example by the Ministry of Defense.

More precisely, the invention's unit is based on the placement of a series of pre-assembled and integrated components into a standard container, providing a very interesting versatility in its transportation, making it transportable even over land, by sea or even by air. That is, the unit is a mobile and independent unit of easy transportation, and which integrates in itself a unique solution that meets the needs for heat, cooling and sanitary hot water, even being possible to incorporate the supply of industrial cooling for refrigerated chambers.

In addition to the logistical and operative advantages, it is worth noting the high efficiency of the unit, reducing energy and monetary costs in its use, as well as maintenance work and the simplification of start up tasks, with the particularity that the unit features the possibility of being remotely managed and controlled, acting in advance to potential incidences or variations in the energy needs of the place in which it is implemented.

The unit uses technologies with high energy efficiency combined with the use of renewable energy, particularly with applications of geothermal energy with a very low enthalpy, also being able to use aero-thermal energy, all that according to three noteworthy mechanisms of action and which correspond to:
1. Immediate action, since the unit may be implemented in aero-thermal mode, thus the waiting times are practically nil, with immediate connection and provision of service in the locations in which it is implemented.
2. Unit's long-life, with facilities of a permanent nature within the nation's territory or in stable long-term missions abroad fitting into this category. The optimal system would be the connection to a geothermal system with a very low enthalpy, so that geothermal collection would be the energy base for climate control, thus obtaining a system with a very high energy efficiency and with a renewable nature, with the associated added value.
3. It is a hybrid unit, since it works in a combined manner, managing the operation mode and adapting it to the optimal one in each situation. That is, there is the duality of offering the possibility to use the aerothermal or geothermal mode, as appropriate, thus optimizing the management and energy efficiency of the system.

Structurally, the components conforming the invention's unit and which are integrated inside the standard container are a geothermal heat pump, with remote condensation, which transmits the heat of the ground or, if applicable, of the air, towards the facilities that are meant to be heated or cooled, so that the heat generated may be used for heating and sanitary hot water. The operating principle is the same as that used by a refrigerator but inversed, i.e., cooling the outside air and heating the inside.

Located inside the container, in addition to the aforementioned heat pump, are two deposits, one designed as a sanitary hot water collector and another one designed as an inertia deposit of the climate control, both connected to the heat pump through fast connection ducts.

A heat exchanger with water condensation associated to a geothermal wells pump is also included, with the particularity that this heat exchanger is connected to an air condensation battery, with condensation air exit fans and condensation air admission fans.

The sanitary water heating and collection deposits as well as those for collection of climate control inertia have the corresponding inlets and outlets both for sanitary hot water supply and for climate control water, all of that with fast connections. Between the heat pump and the climate control inertia deposit, an evaporation and climate control circuit pump has been provided, corresponding to the primary circuit, while the climate control water outlet has been provided with a pulse pump that is part of the secondary circuit, while the sanitary hot water deposit has been provided with a pulse pump.

The unit is further complemented with an electric control panel, jointly determining an innovative and highly efficient unit that uses energetic resources that are renewable in nature and that implies a solution for those users requiring mobility, fast implementation, modularity and energy efficiency in climate control, providing significant savings in assembly, operation, supply and maintenance operations, with a notable reduction in the use of fossil fuels.

The unit may be used in any area of the world, including a control system that enables the use of both "aerothermics" and "geothermics", depending on the more favourable environmental and geothermal parameters, therefore using the most efficient energy in each scenario.

Taking into account that low enthalpy geothermal energy is considered the most efficient, ecological and economic for the production of climate control, it however requires a series of drillings (in the case of vertical probes) or land movements (in the case of horizontal probes) for its exploitation, so it is not always feasible. Thus, in this scenario or in one requiring the use of immediate climate control, the unit may function in an "aerothermal" mode, while the geothermal collection is being performed to subsequently operate in this mode.

Finally, it is worth mentioning that the control system is designed to be able to easily assemble several containers in line, i.e., units, and thus increase or decrease the power that is required for different facilities, without the need to manufacture specific containers for each location. Additionally, the control system allows for monitoring through the Web, thus facilitating the preventive, predictive and corrective maintenance tasks.

### DESCRIPTION OF THE DRAWINGS

To complement the description being made and in order to help better understanding the features of the invention, according to a preferred practical embodiment thereof, a set of drawings is attached as an integral part of said description, wherein the following is shown as way of illustration but not limited to:

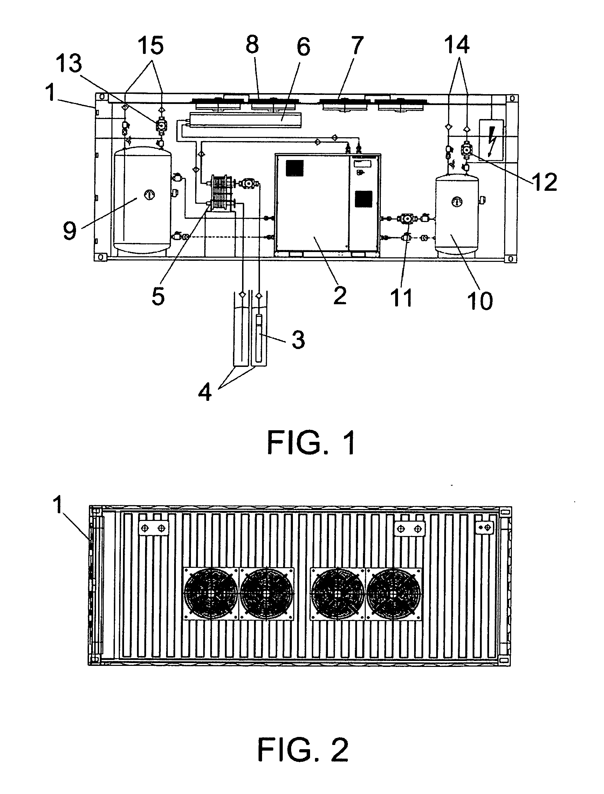

- Figure 1.: Shows a schematic representation corresponding to an elevation view of the autonomous climate control unit object of the invention.
- Figure 2.: Shows an upper plant view of the same unit represented in the figure above.

### PREFERRED EMBODIMENT OF THE INVENTION

As it may be seen in the aforementioned figures, the invention's unit is formed by a standard container (1) that allows an easy transportation and a fast use of the unit, since inside said container (1) there are various components assembled that make up the unit, among which it is worth mentioning a geothermal heat pump (2) with remote condensation, which is highly efficient and transmits heat from the ground, in which some geothermal wells (4) have been provided, so that in order to facilitate the thermal exchange of the fluid with these geothermal wells (4), a water circulation pump with variable flow is installed, working at the system's demand, so that the circulation of the heat transferring fluid is made through geothermal probe (3), thus performing the thermal exchange with the ground.

Said thermal exchange of the fluid with the geothermal wells (4) is facilitated by way of a water heat exchanger (5) associated with an air condensation battery (6) provided so that when the control system requires it, either due to better conditions or to the geothermal circuit not being installed, it goes into "aerothermics" operation mode, so that this air condensation battery (6) is made of finned copper and performs the thermal exchange with the air, providing air admission fans (7) and condensation air exit fans (8), with these fans featuring variable flow, making the air from the air condensation battery (6) flow both to the inside and to the outside.

Also included inside the container (1) are a heating and collection deposit for sanitary hot water (9) as well as a climate control inertia deposit (10), with both deposits being connected to the geothermal heat pump (2) through fast connections, with the inclusion of valves and other necessary components, as well as a pump (11) between the heat pump (2) and the climate control and inertia deposit (10), with that pump (11) corresponding to the primary climate control circuit and being provided to facilitate the thermal exchange of the fluid with the aforementioned climate control deposit (10), with the pump (11) featuring constant flow and operating at the system's demand, in order to perform the thermal exchange with the water intended for climate control in the inside area that is desired.

Outside the climate control and inertia deposit (10) a pulse pump (12) has been provided corresponding to the secondary climate control circuit, with this pump (12) having a variable flow and which is the one in charge of re-circulating the water throughout the future interior circuit to provide climate control to the atmosphere through interior emitters such as radiant floors, Fancoil, etc.

Outside the sanitary hot water collection deposit (9), a hot water impulse pump (13) has been provided.

The corresponding inlet / outlet to the pipes for the supply of climate control water of the inertia and climate control deposit (10), are those referenced with number (14), while the inlet / outlet of sanitary hot water supply pipes of the collection deposit (9) are those referenced (15), with them being in this case the hot water outlet and the cold water inlet.

The unit offers outstanding and numerous advantages, both from the standpoint of using the geothermal system, whose advantages may be summarized in an environmental and economic benefit, in a reduction of CO₂ emissions, a decrease in the consumption of primary energy, a smoothing of electric demand peaks, an invisible climate control, clean energy, sustainability, comfort, a decrease and optimization of climate control consumption, the advantages that the unit itself provides may be summarized in the following:
- It entails a system with high performance and a reduction in consumption.
- Low operation and maintenance costs, with the latter being also more simple.
- Standardization and harmonizing in the design of, for example, military camps.
- Decrease in acoustic level.
- Safety, since it decreases the emission of fuels and reduces problems in the cost of fuel supply.
- It improves the aesthetic impact, entailing an integral solution.
- Independent operation possibilities (collection and / or with geothermal energy).
- Integration of all the components within one single container, resulting in a completely preassembled unit.
- Easy transportation, both on land and water as well as air.
- Modularity.
- Versatility.
- Fast implementation.
- Reutilization.
- Operational under extreme climatic conditions.
- Possibility of remote management and maintenance.

## Claims

1. Autonomous climate control unit, which being intended to provide hot water for climate control as well as sanitary hot water, using "geothermics" or "aerothermics" as a source of energy, is **characterized in that** it is formed by a portable container (1), inside which a high efficiency geothermal heat pump (2) is assembled, able to transmit the heat from the ground or from the air to be used both for heating and for sanitary hot water, whose heat pump is connected to a sanitary hot water collection deposit (9) and to a climate control inertia deposit (10), these deposits being associated to their respective inlet / outlet of sanitary hot water supply and of climate control water respectively; having further provided a water condensation heat exchanger in connection with some geothermal wells (4) with a geothermal probe to perform the thermal exchange with the ground, with this water condensation heat exchanger (5) being connected to a air condensation battery (6) likewise connected to a heat pump, with said air condensation battery being associated to a respective group of condensation air admission fans (7) and air exit fans, all of this with an electric panel and a control system that allows using the unit in a "geothermics" and a "aerothermics" mode.

2. Autonomous climate control unit according to claim 1, **characterized in that** between the heat pump and the climate control inertia deposit (10), a constant flow pump has been provided for the circulation of water between the heat pump and the climate control inertia deposit, while outside said deposit a water pulse pump (12) with a variable flow has been provided for climate control water pumping, having a sanitary hot water supply pump outside the sanitary hot water collection deposit.

3. Autonomous climate control unit according to any of the previous claims, **characterized in that** both the connections between the water pump and the sanitary hot water and climate control deposits, and the pump connections are carried out by fast connections.
